**Europäisches Patentamt**

**European Patent Office**

**Office européen des brevets**

(19)

(11) Numéro de publication : **0 161 177**
**B1**

(12)                    **FASCICULE DE BREVET EUROPÉEN**

(45) Date de publication du fascicule du brevet :
15.06.88

(51) Int. Cl.⁴ : **H 04 J   3/06**

(21) Numéro de dépôt : **85400740.8**

(22) Date de dépôt : **15.04.85**

(54) **Procédé et dispositif de récupération de mot de verrouillage de trame à bits répartis dans un signal numérique.**

(30) Priorité : **20.04.84 FR 8406324**

(43) Date de publication de la demande :
**13.11.85 Bulletin 85/46**

(45) Mention de la délivrance du brevet :
**15.06.88 Bulletin 88/24**

(84) Etats contractants désignés :
**CH DE GB IT LI NL SE**

(56) Documents cités :
**DE-A- 2 345 491**
**US-A- 3 597 547**
**US-A- 3 603 735**
**NEC RESEARCH & DEVELOPMENT, no. 6, décembre
1963, pages 32-43, Tokyo, JP; T. SEKIMOTO et al.:
"Group synchronization for digital transmission systems"**
**ELECTRONICS, vol. 53, 23 octobre 1980, page 260,
New York, US; "Chip looks for 64-bit word"**

(73) Titulaire : **Bojarski, Alain
38, rue de Kerangarou
F-22700 Perros Guirec (FR)**

(72) Inventeur : **Bojarski, Alain
38, rue de Kerangarou
F-22700 Perros Guirec (FR)**

(74) Mandataire : **Martinet & Lapoux
62, rue des Mathurins
F-75008 Paris (FR)**

**EP 0 161 177 B1**

## Description

La présente invention est relative à un procédé et un dispositif de récupération de verrouillage de trame dans un signal de transmission numérique dans lequel une information de synchronisation est constituée par un mot binaire verrouillage de trame ayant N bits qui sont insérés de façon répartie dans la trame du signal numérique.

Une telle synchronisation a déjà été utilisée dans la transmission par faisceaux hertziens numériques ayant des débits compris entre 2 et 280 Mbit/s. Des procédés mis en œuvre pour l'acquisition du verrouillage de trame ont pour caractéristique d'être d'autant plus rapides, que le débit est élevé. C'est pourquoi les temps de reprise du verrouillage de trame restent dans des limites acceptables.

Dans les systèmes téléphoniques avec numérisation de la ligne d'abonné, actuellement en cours de développement, on envisage d'utiliser un motif de synchronisation du type réparti, ou dit également distribué, évoqué précédemment. Toutefois, dans ce cas, le débit numérique à considérer pour la transmission est un débit de base égal au débit d'information entre une installation d'abonné et un central téléphonique de rattachement. Sur le plan pratique, le débit retenu a pour valeur 160 kbit/s correspondant à un débit d'information utile de 144 kbit/s. Pour de tels débits numériques, les procédés usuels de récupération du verrouillage de trame ne conviennent plus, car ils impliquent des temps de reprise de verrouillage de trame élevés.

L'invention a pour but de proposer un procédé et un dispositif pour acquérir rapidement le verrouillage de trame, lorsque le mot de verrouillage de trame est réparti dans l'information à transmettre, en initialisant une nouvelle recherche du mot de verrouillage chaque fois qu'un bit prélevé dans le signal numérique est différent de celui attendu et correspondant de même rang dans le mot de verrouillage.

A cette fin, un procédé pour récupérer un mot de verrouillage de trame à bits répartis dans un signal de transmission numérique est tel que défini dans le revendication 1, et un dispositif de récupération de mot de verrouillage de trame pour la mise en œuvre du procédé selon l'invention est tel que défini dans la revendication 4.

D'autres caractéristiques avantageuses du procédé et du dispositif sont formulées dans les revendications dépendantes 2 et 3, et 5 et 6 respectivement.

L'invention va maintenant être décrite en détails en relation avec les dessins annexés dans lesquels :

— la Fig. 1 représente une trame d'un signal numérique dans laquelle les bits d'un mot de verrouillage sont répartis dans la trame, à raison d'un bit par secteur de trames ;

— la Fig. 2 est un bloc-diagramme fonctionnel et schématique d'un dispositif de récupération de mot de verrouillage de trame selon l'invention ;

— la Fig. 3 est un diagramme de circuit détaillé du dispositif de récupération ; et

— la Fig. 4 montre des formes d'onde d'un signal à la fréquence de secteur et de sept signaux de validation de bits du mot de verrouillage de trame établis dans une base de temps du dispositif, respectivement.

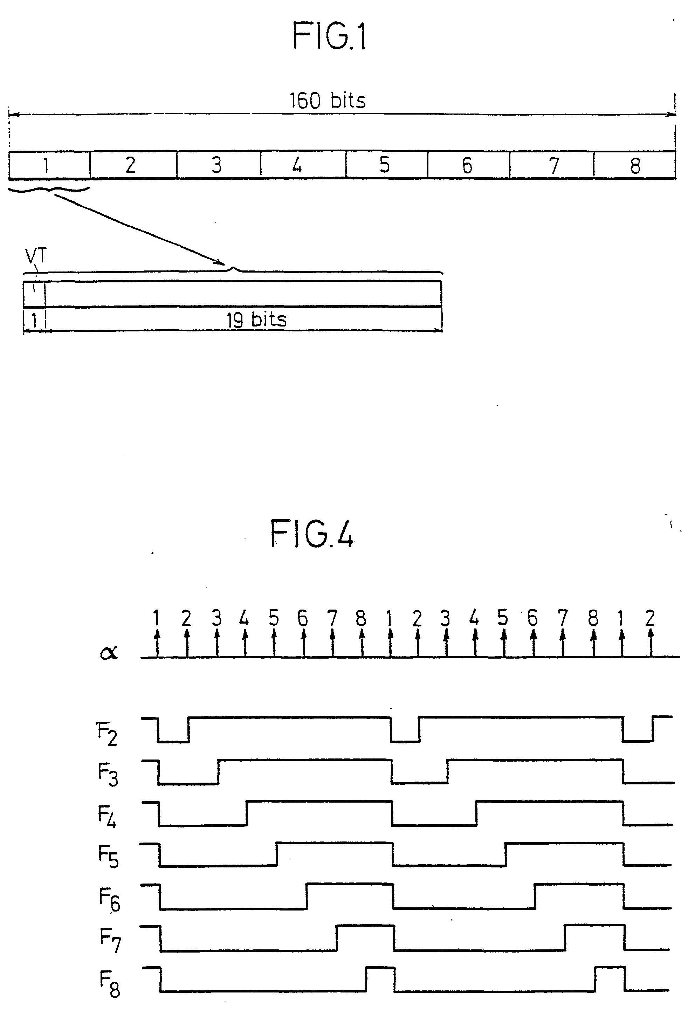

Selon la réalisation illustrée à la Fig. 1, une trame d'un signal numérique comporte 160 bits et est subdivisée en M = 8 secteurs ayant 20 bits chacun. Un mot de verrouillage de trame comporte N = 8 bits VT répartis dans les secteurs. Le premier bit VT de chaque secteur constitue un en-tête du secteur et est l'un des huit bits du mot de verrouillage de trame, les dix-neuf bits restants constituant un paquet de bits d'information à transmettre.

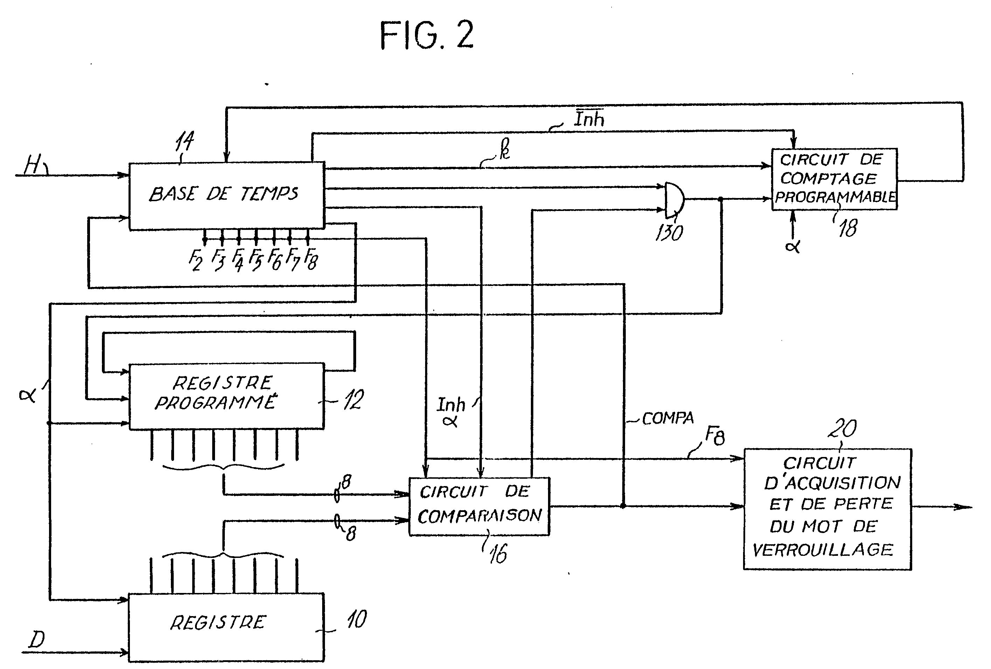

En référence à la Fig. 2, un dispositif de récupération de mot de verrouillage de trame comprend essentiellement, un registre à décalage à huit étages 10, un registre programmé à huit étages 12, une base de temps 14, un circuit de comparaison 16, une porte ET à deux entrées 130, un circuit de comptage programmable 18 et un circuit d'acquisition et de perte du mot de verrouillage 20.

Le premier registre à décalage 10 reçoit par une entrée de données D, les informations numériques structurées selon la trame de la Fig. 1. Les informations ainsi reçues sont chargées dans le registre 10 à une fréquence de secteur α égale à la fréquence bit du signal numérique divisée par le nombre de bits, égal à vingt, dans un secteur. Pour une trame complète délivrée sur l'entrée de données D, le registre 10 extrait un mot constitué par huit bits ou ensembles à 1 bit régulièrement espacés dans la trame. D'autre part, le deuxième registre à décalage 12 délivre un mot de huit bits programmé qui correspond au mot de verrouillage de trame ou à l'une de configurations à huit bits obtenues par permutation et rebouclage du mot de verrouillage de trame sur lui-même, c'est-à-dire par huit décalages successifs d'un bit. Au cours d'un espace temporel correspondant à un secteur sont effectuées des comparaisons du mot mémorisé dans le registre 10 avec les huit configurations possibles fournies par le registre 12.

D'autre part, dans le circuit de comparaison 16 relié à deux bus de sortie à huit fils des registres 10 et 12, les comparaisons du contenu du registre 10 avec les huit configurations du mot de verrouillage de trame établies dans le registre 12 sont effectuées progressivement, au cours d'une trame, au rythme de la fréquence de secteur, sur un, puis deux, puis trois..., puis huit bits acquis dans le registre 10. Ceci a pour avantage de permettre, par exemple, dès le troisième secteur, d'avoir la certitude que les bits acquis dans le registre 10 ne correspondent pas à trois bits quelconques consécutifs du mot de verrouillage de trame. Dans ce cas, la base de temps 14 qui cadence à la fréquence α les registres 10 et 12 est remise à zéro par un signal COMPA délivré par le circuit de comparaison 16 ce qui a pour effet de provoquer le début d'un nouveau cycle de recherche du mot de verrouillage en anticipant ou en retardant d'au moins un bit la mémorisation du signal de données dans le registre 10.

La base de temps 14 reçoit en entrée un signal d'horloge H à la fréquence des bits du signal numérique reçu D et délivre notamment le signal d'horloge à la fréquence secteur $\alpha$, et des signaux de validation de comparaison $F_2$, $F_3$, $F_4$, $F_5$, $F_6$, $F_7$, $F_8$ permettant d'analyser les comparaisons bit à bit successives sur 2, 3, ... 8 des bits contenus dans les registres 10 et 12. Les signaux $F_2$ à $F_8$ dans cet ordre sont engendrés, comme illustré à la Fig. 4, à la condition que pour chaque secteur, la comparaison dans le circuit 16 ait donné un résultat positif permettant d'analyser le bit du signal de données dans le secteur suivant.

A la fin d'une trame signalée par le dernier signal de validation $F_8$, si les huit comparaisons bit à bit entre le contenu du registre 10 et l'une des configurations du mot de verrouillage de trame dans le registre 12 sont positives, le circuit de comptage programmable 18 est chargé à la valeur du rang k de la permutation qui a donné les comparaisons positives, et sous la commande de la porte 130, décompte au rythme de la fréquence secteur jusqu'à zéro. En fin de décomptage, le circuit de comptage 18 recale la base de temps 14, c'est-à-dire synchronise celle-ci sur le premier bit du mot de verrouillage détecté, après avoir laissé passer un nombre de secteurs égal à la valeur du rang k de la permutation qui a été chargée dans le circuit de comptage programmable 18.

Le circuit d'indication d'acquisition et de perte du mot de verrouillage 20 reçoit le signal de sortie COMPA du circuit de comparaison 16 dont l'état indique pour chaque période de trame signalée par le signal $F_8$ si un mot de verrouillage a été détecté ou non. Une sortie du circuit 20 indique une acquisition du verrouillage de trame quand le mot de verrouillage a été détecté pour au moins un nombre donné de trames consécutives, ou indique une perte de verrouillage de trame quand le mot de verrouillage n'a pas été détecté pour au moins un autre nombre donné de trames consécutives.

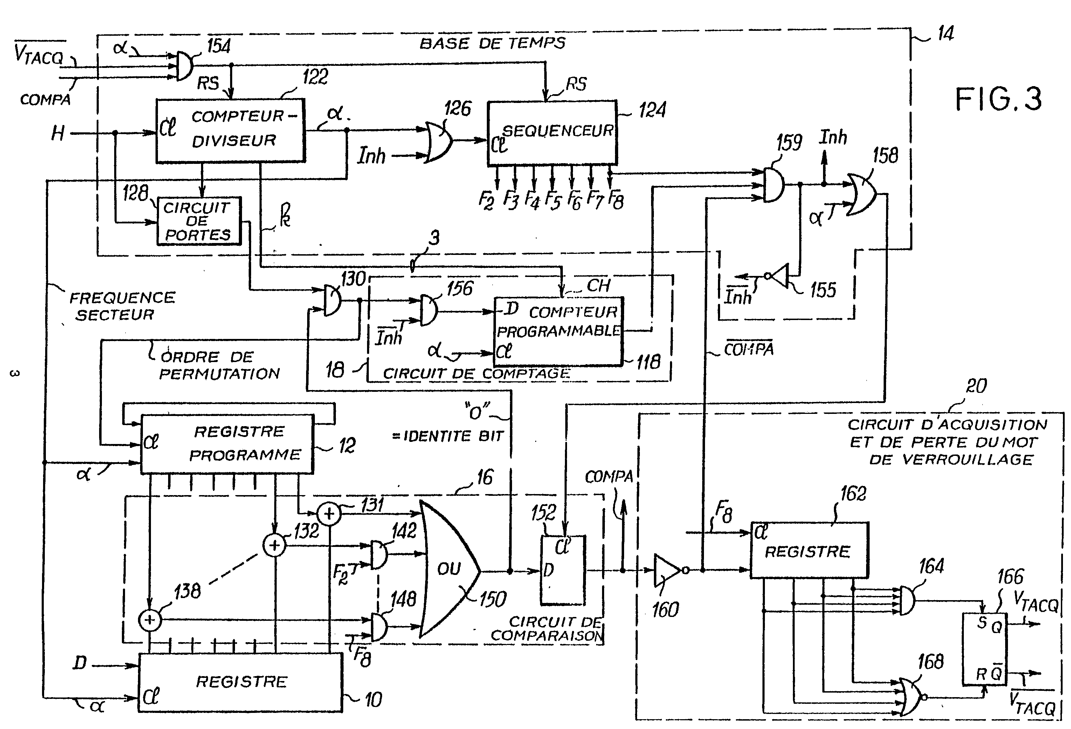

La Fig. 3 est un diagramme de circuit détaillé du dispositif de récupération montré de façon fonctionnelle sur la Fig. 2.

Dans le premier registre 10, les données D sont introduites à la fréquence secteur $\alpha$ appliquée à une entrée d'horloge C1 du registre 10, comme expliqué précédemment. Le deuxième registre 12 est programmé initialement au mot de verrouillage de trame, et est rebouclé sur lui-même pour présenter sur ses huit sorties toutes les permutations circulaires du mot programmé.

La base de temps 14 comporte principalement un compteur-diviseur 122, un séquenceur 124, un circuit de portes 128 ainsi que d'autres composants logiques, tels qu'une porte OU 126 à deux entrées, deux portes ET à trois entrées 154 et 159, un inverseur 155 et une porte OU 158 à deux entrées. Le signal d'horloge bit récupéré H est appliqué à une entrée d'horloge C1 du compteur-diviseur 122 ayant un rapport de division égal au nombre de bits d'un secteur, afin de délivrer le signal de fréquence secteur $\alpha$ qui cadence directement les registres 10 et 12. Le signal $\alpha$ est appliqué à une entrée d'horloge du séquenceur 124 par l'intermédiaire de la porte OU 126 dont le rôle sera expliqué ultérieurement. Le séquenceur 124 délivre par sept sorties une séquence de signaux $F_2$ à $F_8$ utilisés pour des comparaisons bit à bit des contenus des registres 10 et 12 dans le circuit de comparaison 16. La Fig. 4 illustre les formes d'ondes des signaux $F_2$ à $F_8$ qui sont établis à partir du signal de fréquence secteur $\alpha$ dans le séquenceur 124. Les signaux $F_2$ à $F_8$ ont une fréquence égale à la fréquence trame, mais ont des rapports cycliques différents. Pour une trame, le signal $F_2$ est normalement délivré, c'est-à-dire est à l'état logique haut « 1 », à partir du deuxième secteur jusqu'au dernier de la trame, alors que le signal $F_3$ est seulement à l'état haut « 1 » à partir du troisième secteur jusqu'au dernier, et ainsi de suite jusqu'au signal $F_8$ qui n'est à l'état haut « 1 » que pendant le huitième secteur de la trame. Bien entendu, on pourrait généraliser à un nombre de secteurs par trame différent de huit.

Dans la base de temps 14, le circuit de portes 128 est destiné à délivrer au registre 12 un signal d'horloge commandant les permutations circulaires. Pour ce faire, le circuit 128 reçoit par une première entrée le signal d'horloge bit récupéré H et par une seconde entrée un signal d'autorisation délivré par le compteur-diviseur 122 et laissant passer huit impulsions d'horloge H à chaque début du signal de fréquence secteur $\alpha$. Selon une variante, le signal d'horloge synchrone H appliqué au circuit 128 est remplacé par un signal d'horloge séparé ayant une fréquence supérieure. Le signal d'ordre de permutation à la sortie du circuit 128 est appliqué à une première entrée de la porte ET 130 pour être transmis à une entrée d'horloge du registre 112. Un signal d'identité de bit délivré par le circuit de comparaison 16 est appliqué à une seconde entrée de la porte 130 afin d'interrompre le signal d'ordre de permutation dès que le circuit 16 détecte une identité bit à bit lors de la comparaison entre les éléments binaires dans les registres 10 et 12, soumis à comparaison. En outre, le registre 12 est rechargé à la valeur du mot de verrouillage programmé, à chaque début de secteur, sous la commande du signal $\alpha$.

Le circuit de comparaison 16 comporte huit portes OU-Exclusif 131 à 138 ayant chacune deux entrées respectivement reliées à des sorties des registres 10 et 12 délivrant deux bits de même rang. Ainsi, les portes 131 à 138 comparent bit à bit les contenus des registres 10 et 12. A l'exception de la porte OU-Exclusif 131 qui effectue la comparaison entre les bits de plus faible poids du mot programmé et du contenu du registre 10, les sorties des autres portes OU-Exclusif 132 à 138 sont reliées à des premières entrées de portes ET respectives 142 à 148 ayant des secondes entrées recevant les signaux $F_2$ à $F_8$ délivrés par les sorties du séquenceur 124. Le rôle des signaux $F_2$ à $F_8$ est de valider progressivement les comparaisons sur les bits acquis au rythme de fréquence α dans le registre 10, au fur et à mesure du chargement de ce dernier. Ainsi, si après avoir chargé trois bits dans le registre 10, aucune des comparaisons entre ces trois bits et les trois bits correspondants de chacune des huit permutations établies sous la commande du signal sortant de la porte ET 130 ne détecte d'identité, il est alors inutile de continuer de charger au rythme α d'autres bits dans le registre 10, à partir du signal de données D. Le dispositif démarre alors une nouvelle phase d'acquisition du mot de verrouillage de trame comme il sera expliqué en détails par la suite.

Dans le circuit de comparaison 16, la sortie de la porte OU-Exclusif 131 et les sorties des portes ET 142 à 148 sont respectivement reliées aux huit entrées d'une porte OU 150 dont la sortie est reliée à la seconde entrée de la porte ET 130 et à une entrée D d'une bascule du type D 152. En conséquence, lorsqu'un zéro est obtenu en sortie de la porte 150, c'est-à-dire que le circuit 16 a reconnu une identité bit à bit entre les bits déjà chargés dans le registre 10 et les bits correspondants du registre 12 soumis aux permutations circulaires, toute permutation supplémentaire pour la période de secteur en cours est alors interdite et le circuit de comparaison 16 reste figé, jusqu'à ce qu'on aborde l'analyse du secteur suivant dont le début correspond à la délivrance de la prochaine impulsion du signal α.

Au contraire, si la comparaison bit à bit n'a révélé aucune identité entre les bits chargés dans le registre 10 et les bits correspondants résultant de toutes les permutations circulaires dans le registre 12 pendant une période de secteur, il est inutile de continuer à charger le registre 10 jusqu'à la fin de la période de trame en cours, comme expliqué précédemment. Le dispositif de récupération se comporte alors de la manière suivante : la bascule D 152 dans le circuit de comparaison enregistre la valeur « 1 » alors présente en sortie de la porte OU 150, au rythme de la fréquence secteur. Le signal COMPA = 1 sortant de la bascule 152 est appliqué à une première entrée de la porte ET 154 ayant une seconde entrée recevant le signal α et autorise ainsi à travers la porte ET 154 la transmission du signal α vers des entrées RS du compteur-diviseur 122 et du séquenceur 124 qui sont remis à zéro. Le compteur-diviseur 122 et le séquenceur 124 sont remis à zéro sur un front du signal α tel que, au cours du processus réinitialisé, le début d'un nouveau secteur analysé dans le flot de données D soit décalé d'au moins un bit par rapport au début du secteur suivant qu'aurait normalement identifié le compteur-diviseur en l'absence de réinitialisation. En d'autres termes, les bits chargés dans le registre 10 à partir du flot de données D après la réinitialisation, sont décalés d'un ou plusieurs bits par rapport aux bits qui auraient été normalement enregistrés en cas de non-interruption du processus. Le fait d'interrompre le processus d'identification du mot de verrouillage de trame sans avoir attendu l'analyse d'un flot de données correspondant à une longueur de trame complète, permet un gain de temps appréciable dans l'acquisition du verrouillage de trame.

Dans le cas où une comparaison correcte a été trouvée jusqu'au huitième secteur inclus, le dispositif de récupération se comporte de la manière suivante. Dans le circuit de comptage 18, un compteur programmable 118 reçoit par une entrée de chargement CH un numéro k de permutation, ici à 3 bits, fourni par le compteur-diviseur 122 et correspondant à l'ordre de la permutation en cours d'examen fourni par la porte 130 et commandant, comme déjà dit, la permutation circulaire des bits dans le registre 12. Le signal d'ordre de permutation est transmis à une entrée de décomptage D du compteur 118 par l'intermédiaire d'une porte ET à deux entrées 156 contrôlée par un signal de commande désigné par $\overline{\text{Inh}}$. Le signal Inh est établi par la porte ET 159 de la base de temps 14 ayant des entrées recevant le signal $F_8$ caractéristique du dernier secteur, un signal délivré par le compteur 118 qui est à l'état « 1 » pour indiquer que le compte du compteur 118 a une valeur différente de zéro et le signal $\overline{\text{COMPA}}$ délivré par un inverseur 160 relié à la sortie de la bascule 152, respectivement. Le signal de commande $\overline{\text{Inh}}$ est délivré par l'inverseur 155 relié à la sortie de la porte ET 159 qui est également reliée à des entrées des portes OU 158 et 126. Le signal de commande $\overline{\text{Inh}}$ n'autorise pas le décomptage dans le compteur 118 lorsque $\overline{\text{Inh}} = 1$, et plus précisément dans des conditions déterminées qui sont expliquées ci-après. Le signal Inh = 1 est délivré par la porte 159 lorsque la comparaison pendant le dernier espace temporel de secteur a donné un résultat révélant une identité de bits, ce qui correspond à $F_8$ = « 1 », $\overline{\text{COMPA}}$ = « 1 », et à un compte du compteur programmable 118 ayant une valeur différente de 0. Dans ce cas, la porte 156 est bloquée afin d'autoriser un décomptage dans le compteur 118, au rythme de la fréquence secteur α appliquée à une entrée d'horloge C1 du compteur 118. Simultanément, quand le signal Inh est à « 1 », le fonctionnement du séquenceur 124 est inhibé par application du signal Inh à une entrée de la porte OU 126 ayant une autre entrée recevant le signal α et une sortie reliée à l'entrée d'horloge C1 du séquenceur. D'autre part, la prise en compte par la bascule D 152 du résultat de la comparaison effectuée dans le circuit de comparaison 16 est inhibée par application du signal Inh à l'entrée d'horloge C1 de la bascule 152 via la porte OU 158 fournissant la fréquence secteur α. Lorsque le compte dans le compteur 118 atteint la valeur zéro, la porte ET 156 est à nouveau fermée et les portes OU 126 et 158 sont à nouveau ouvertes, ce qui permet un fonctionnement comme décrit précédemment.

Le décomptage du nombre k d'espaces temporels de secteur égal au rang de la permutation ayant suscité l'égalité bit à bit des contenus des registres 10 et 12 permet de synchroniser la base de temps 14 et plus précisément, le séquenceur 124 sur le début du mot de verrouillage ainsi détecté dans le registre 10.

Le circuit d'identification d'acquisition et de perte du mot de verrouillage de trame 20 comporte outre l'inverseur 160, un registre à décalage 162 qui reçoit sur une entrée de données le signal $\overline{COMPA}$ délivré par l'inverseur 160 et sur une entrée d'horloge C1 le signal $F_8$. Dans le circuit 20, des sorties d'étages consécutifs dans le registre 162 sont reliées respectivement d'une part à des entrées d'une porte ET 164 ayant une sortie reliée à une entrée S de mise à « 1 » d'une bascule bistable RS 166, d'autre part, à des entrées d'une porte NON-OU 168 ayant une sortie reliée à une entrée R de mise à zéro de la bascule 166. Des sorties Q et $\overline{Q}$ de la bascule 166 caractérisent l'état du verrouillage de la trame. Dans la réalisation illustrée à la Fig. 3, quatre sorties consécutives du registre 162 sont reliées à quatre entrées de la porte ET 164 et à quatre entrées de la porte NON-OU 168, ce qui signifie, que le verrouillage de trame est acquis lorsque le registre 162 et la porte ET 164 ont reconnu un mot de verrouillage de trame dans au moins quatre trames consécutives. En effet, chaque fois que le circuit de comparaison 16 a détecté une identité de huit bits à la fin d'une période de trame, le signal $\overline{COMPA}$ = 1 est enregistré dans le registre 162 sous la commande du signal de fin de trame $F_8$. Par contre, le verrouillage de trame est considéré comme perdu lorsque le registre 162 et la porte NON-OU 168 n'ont pas trouvé de mot de verrouillage de trame pendant au moins quatre trames consécutives.

Selon d'autres variantes, les critères d'acquisition et de perte de verrouillage de trame peuvent être différents. Il suffit alors de disposer d'un registre 162 ayant un nombre d'étages prédéterminé égal au plus grand nombre des deux nombres d'entrées des portes 164 et 168, ces derniers pouvant être différents, et de relier aux portes 164 et 168, un nombre de sorties du registre 162 correspondant aux critères retenus.

La porte $\overline{ET}$ 154 reçoit par une troisième entrée un signal $\overline{V_{TACQ}}$ délivré par la sortie $\overline{Q}$ de la bascule 166. Ainsi, tant que $\overline{V_{TACQ}}$ = « 0 » et donc tant que le verrouillage de trame est considéré comme acquis, il n'y a pas de possibilité de remise à zéro du compteur-diviseur 122 et du séquenceur 124 et donc de réinitialisation de la base de temps 14.

Selon d'autres variantes, l'en-tête de chaque secteur d'une trame comprend un nombre prédéterminé de bits du mot de verrouillage. Par exemple, le mot de verrouillage de trame comprend N = 16 bits, à raison de deux bits constituant les deux premiers bits de chacun des M = 8 secteurs d'une trame. Dans ce cas le signal $\alpha$ est composé de créneaux chacun égal à la durée de deux bits du signal numérique D pour prélever un ensemble à 2 bits dans le signal D à enregistrer dans le registre 10, chacun des registres 10 et 12 ayant 16 étages.

## Revendications

1. Procédé pour récupérer un mot de verrouillage de trame à bits répartis dans un signal de transmission numérique dans lequel chaque mot de verrouillage d'une trame a N bits prédéterminés insérés de façon répartie dans la trame du signal numérique, chaque trame est divisée en un nombre M de secteurs consécutifs et chaque secteur a un en-tête constitué par des bits du mot de verrouillage en un nombre prédéterminé de telle sorte que les en-têtes des secteurs consécutifs d'une trame mis bout à bout forment ledit mot de verrouillage, caractérisé en ce que,
   — des ensembles de bits sont prélevés dans le signal numérique, à une fréquence de secteur, chaque ensemble de bits ayant un nombre de bits égal au nombre de bits dans un en-tête, les ensembles de bits prélevés séparant des paquets de bits du signal numérique ayant des longueurs égales,
   — les ensembles de bits prélevés sont mémorisés pour constituer un mot binaire de longueur croissante ayant une longueur maximale égale à la longueur du mot de verrouillage de trame,
   — le mot binaire mémorisé est comparé avec chacun de N mots constitués par le mot de verrouillage de trame et N—1 permutations circulaires du mot de verrouillage de trame,
   — le rang k d'une permutation circulaire du mot de verrouillage de trame pour laquelle la comparaison sur un nombre de N bits a eu pour résultat une identité est déterminé, où k est un entier compris entre 1 et N, et
   — le signal numérique est synchronisé sur le début du k-ième secteur délivré, après que ladite comparaison a donné un résultat positif.

2. Procédé selon la revendication 1, caractérisé en ce que chaque fois qu'au moins un bit prélevé est ajouté au mot binaire de longueur croissante, des comparaisons bit à bit des bits mémorisés du mot binaire de longueur croissante avec les bits de rangs correspondants du mot de verrouillage de trame et de ses N—1 permutations circulaires sont effectuées et en ce que le procédé est réinitialisé dès qu'aucune des N comparaisons précédentes n'a donné un résultat positif.

3. Procédé selon la revendication 2, caractérisé en ce que le procédé est réinitialisé de telle sorte que le premier ensemble de bits prélevé après la réinitialisation diffère de celui qui aurait été normalement prélevé si le procédé n'avait pas été réinitialisé, des ensembles de bits suivants étant à nouveau prélevés à la fréquence de secteur.

4. Dispositif de récupération de mot de verrouillage de trame pour la mise en œuvre du procédé selon l'une quelconque des revendications 1 à 3, caractérisé en ce qu'il comprend
   — un premier registre à décalage à N bits (10) recevant le signal numérique (D) et cadencé à la fréquence de secteur ($\alpha$) de manière à enregistrer progressivement les ensembles de bits prélevés,

— un second registre à décalage à N bits (12) programmé sur le mot de verrouillage de trame et rebouclé sur lui-même, de manière à établir toutes les permutations circulaires du mot de verrouillage de trame programmé,

— des moyens de comparaison (16) pour comparer bit à bit le mot délivré par le premier registre (10) et le mot de verrouillage programmé et les permutations circulaires de celui-ci,

— une base de temps (14) délivrant périodiquement à la fréquence de trame, une séquence de signaux ($F_1$ à $F_8$) déterminant M espaces temporels consécutifs ayant chacun une durée égale à celle d'un secteur, et

— des moyens de mémorisation (18) pour mémoriser le rang k de la permutation pour laquelle une identité a été détectée par les moyens de comparaison (16) entre les contenus des premier et deuxième registres (10, 12),

— la base de temps (14) étant inhibé après que, pendant l'espace temporel de secteur de rang M dans une trame, ladite identité entre les contenus des premier et deuxième registres a été détectée, et restant inhibée pendant un nombre d'espaces temporels de secteur égal au rang k de la permutation mémorisée.

5. Dispositif selon la revendication 4, caractérisé en ce qu'il comprend des moyens d'acquisition et de perte de verrouillage de trame (20) délivrant un signal de commande ($V_{TACQ}$) indiquant que le verrouillage de trame est acquis lorsque les moyens de comparaison (16) ont constaté un nombre prédéterminé (par exemple 4) d'identités des contenus des premier et deuxième registres au cours d'espaces temporels de rang M successifs.

6. Dispositif selon la revendication 4 ou 5, caractérisé en ce que les moyens de comparaison (16) sont commandés à la fréquence de secteur ($\alpha$) afin d'effectuer des comparaisons chaque fois que le premier registre (10) a enregistré un ensemble de bits, chaque comparaison n'étant effectuée que sur les bits des ensembles effectivement enregistrés dans le premier registre (10) au cours de la séquence de signaux ($F_1$ à $F_8$) délivrée par la base de temps (14), et en ce que le dispositif comprend des moyens (152, 154) pour réinitialiser la base de temps (14) avec décalage des espaces temporels, lorsqu'aucune des comparaisons des bits des ensembles enregistrés dans le premier registre (10) et des bits correspondants du mot de verrouillage de trame et de ses permutations circulaires n'a donné de résultat positif.

## Claims

1. Process for recovering a frame alignment word having bits distributed in a digital transmission signal wherein each alignment word of a frame has N predetermined bits inserted in a distributed fashion in the frame of the digital signal, each frame is divided into a number M of consecutive sectors, and each sector has a heading made up of bits of the alignment word in a predetermined number such that the headings of the consecutive sectors in a frame placed end to end form said alignment word, characterized in that :

— bit groups are taken from the digital signal, at a sector frequency, each bit group having a bit number equal to the bit number in a heading, the taken bit groups separating bit packets in the digital signal having equal lengths,

— the taken bit groups are stored to constitute an increasing-length binary word having a maximum length equal to the length of the frame alignment word,

— the stored binary word is compared with each of N words composed of the frame alignment word and N—1 circular permutations of the frame alignement word,

— the rank k of a circular permutation of the frame alignment word for which the comparison on a number of N bits results in an identity is determined, where k is an integer lying between 1 and N, and

— the digital signal is synchronized on the start of the $k^{th}$ sector delivered, after said comparison has given a positive result.

2. Process according to claim 1, characterized in that whenever at least one taken bit is added to the increasing-length binary word, bit-by-bit comparisons of the stored bits in the increasing-length binary word with the bits of corresponding ranks in the frame alignment word and its N—1 circular permutations are carried out, and in that the process is reinitialized once none of the N foregoing comparisons has given a positive result.

3. process according to claim 2, characterized in that the process is reinitialized such that the first taken bit group after reinitialization differs from that which would normally have been taken had the process not been reinitialized, following bit groups being then taken at the sector frequency.

4. Frame alignment word recovering device for carrying out the process according to any one of claims 1 to 3, characterized in that it comprises :

— a first N-bit shift register (10) receiving the digital signal (D) and timed at a sector frequency ($\alpha$) thereby progressively storing the taken bit groups,

— a second N-bit shift register (12) programmed on the frame alignment word and looped back on itself thereby deriving all the circular permutations of the programmed frame alignment word,

— comparing means (16) for comparing bit-by-bit ther word delivered from the first register (10) and the programmed alignment word and the circular permutations thereof,

— a time base (14) periodically delivering at the frame frequency, a sequence of signals ($F_1$ to $F_8$) determining M consecutive time slots each having a duration equal to that of a sector, and

— storing means (18) for storing the rank k of the permutation for which an identity has been detected by the comparing means (16) between the contents of the first and second registers (10, 12),

— the time base (14) being inhibited once, during the sector time slot of rank M in a frame, said identity between the contents of first and second registers has been detected, and remaining inhibited for a number of sector time slots equal to the rank k of the stored permutation.

5. Device according to claim 4, characterized in that it comprises frame alignment acquisition and loss means (20) delivering a control signal ($V_{TACQ}$) indicating that the frame alignment is acquired when the comparing means (16) have established a predetermined number (e. g. 4) of identities between the contents in the first and second registers during successive time slots of rank M.

6. Device according to claim 4 or 5, characterized in that the comparing means (16) are controlled at the sector frequency ($\alpha$) in order to carry out comparisons whenever the first register (10) has stored a bit group, each comparison being carried out only on the bits of the groups effectively stored in the first register (10) during the signal sequence ($F_1$ to $F_8$) delivered by the time base (14), and in that the device comprises means for reinitializing the time base (14) with shift of the time slots, when none of the comparisons between the stored group bits in the first register (10) and the corresponding bits of the frame alignment word and of its circular permutations has given positive result.

**Patentansprüche**

1. Verfahren zur Wiedergewinnung eines Rahmenverriegelungswortes mit verteilten Bits in einem digitalen Übertragungssignal, bei dem jedes Verriegelungswort eines Rahmens N vorbestimmte, in dem Rahmen des Digitalsignals verteilt eingefügte Bits aufweist, jeder Rahmen in eine Anzahl M aufeinanderfolgender Sektoren unterteilt ist und jeder Sektor eine aus einer derart vorbestimmten Anzahl von Bits des Verriegelungsworts gebildete Überschrift besitzt, daß die Überschriften der aufeinanderfolgenden Sektoren eines Rahmens nacheinander das Verriegelungswort bilden, dadurch gekennzeichnet, daß in dem Digitalsignal mit Sektorfrequenz Bitmengen erfaßt werden, wobei jede Bitmenge eine der Zahl der Bits einer Überchrift gleiche Anzahl von Bits aufweist, und die erfaßten Bitmengen Bitpakete des Digitalsignals gleicher Länge trennen, daß die erfaßten Bitmengen zur Bildung eines Binärwortes zunehmender Länge gespeichert werden, welches eine maximale Länge hat, die gleich der Länge des Rahmenverriegelungswortes ist, daß das gespeicherte Binärwort mit jedem der N Wörter verglichen wird, die von dem Rahmenverriegelungswort und N—1 zyklischen Vertauschungen des Rahmenverriegelungswortes gebildet sind, daß der Rang k einer zyklischen Vertauschung des Rahmenverriegelungsworts bestimmt wird, für welche der Vergleich über eine Anzahl von N bits Identität ergeben hat, wobei k eine ganze Zahl zwischen 1 und N ist, und daß das Digitalsignal mit dem Anfang des k-ten Sektors synchronisiert wird, nachdem der Vergleich ein positives Resultat ergeben hat.

2. Verfahren nach Anspruch 1, dadurch gekennzeichnet, daß jedesmal dann, wenn wenigstens ein erfaßtes Bit einem Binärwort zunehmender Länge hinzugefügt worden ist, die bitweisen Vergleiche der gespeicherten Bits des Binärwortes zunehmender Länge mit den Bits der entsprechenden Ränge des Rahmenverriegelungswortes und seiner N—1 zyklischen Vertauschungen ausgeführt werden, und daß das Verfahren wieder neu begonnen wird, wenn jeder der N vorhergehenden Vergleiche kein positives Resultat ergeben hat.

3. Verfahren nach Anspruch 2, dadurch gekennzeichnet, daß das Verfahren in der Weise wieder ausgelöst wird, daß die erste erfaßte Bitmenge nach der Wiederauslösung sich von derjenigen unterscheidet, die normalerweise erfaßt werden würde, wenn das Verfahren nicht wieder ausgelöst worden wäre, wobei die folgenden Bitmengen erneut mit Sektorfrequenz erfaßt werden.

4. Einrichtung zur Wiedergewinnung eines Rahmenverriegelungswortes zur Ausführung des Verfahrens nach einem der Ansprüche 1 bis 3, gekennzeichnet durch ein erstes Schieberegister (10) für N Bits, welches das Digitalsignal (D) aufnimmt und mit Sektorfrequenz (d) zur progressiven Aufnahme der erfaßten Bitmengen betrieben wird, durch ein zweites Schieberegister (12) für N Bits, welches auf das Rahmenverriegelungswort programmiert und mit sich selbst rückgekoppelt ist, so daß alle zyklischen Vertauschungen des programmierten Rahmenverriegelungswortes ermöglicht werden, durch Vergleichseinrichtungen (16) zum bitweisen Vergleich des von dem ersten Register (10) ausgegebenen Wortes und des programmierten Verriegelungswortes sowie der zyklischen Vertauschungen desselben, durch einen Zeitgeber (14), welcher periodisch mit Rahmenfrequenz eine Signalsequenz ($F_1$ bis $F_8$) liefert, welche M aufeinanderfolgende Zeitschlitze bestimmt, von denen jeder die Dauer eines Sektors aufweist, sowie durch Speichereinrichtungen (18) zum Speichern des Rangs k der Vertauschung, für die eine Identität durch die Vergleichseinrichtung (16) zwischen den Inhalten des ersten und des zweiten Registers (10, 12) festgestellt worden ist, wobei der Zeitgeber (14) gehemmt ist, nachdem während des Zeitschlitzes des Sektors vom Rang M in einem Rahmen die Identität zwischen den Inhalten des ersten und des zweiten registers festgestellt worden ist und gehemmt bleibt, während einer Anzahl von Sektorzeitschlitzen, die gleich dem Rang k der gespeicherten zyklische Vertauschung ist.

5. Einrichtung nach Anspruch 4, gekennzeichnet durch Einrichtungen (20) zum Erfassen und zum Verlust des Rahmenverriegelungswortes, welche ein Steuersignal ($V_{TACQ}$) zur Anzeige

dafür abgeben, daß das Rahmenverriegelungswort erfaßt ist, wenn die Vergleichseinrichtung (16) eine vorbestimmte Anzahl (beispielsweise 4) von Identitäten zwischen den Inhalten des ersten und zweiten Registers im Laufe der aufeinanderfolgenden Zeitschlitze vom Range M festgestellt haben.

6. Einrichtung nach Anspruch 4 oder 5, dadurch gekennzeichnet, daß die Vergleichseinrichtungen (16) mit Sektorfrequenz (d) gesteuert sind, um die Vergleiche jedesmal dann auszuführen, wenn das erste Register (10) eine Bitmenge aufgenommen hat, wobei jeder Vergleich nur über die effektiv im ersten Register (10) aufgenommene Bitmenge im Laufe der Signalsequenz ($F_1$ bis $F_8$) ausgeführt wird, die vom Zeitgeber (14) geliefert ist, und daß Mittel (152, 154) zur Wiederauslösung des Zeitgebers (14) mit Verzögerung der Zeitschlitze vorgesehen sind, wenn irgendeiner der Vergleiche der im ersten Register (10) enthaltenen Bits mit den entsprechenden Bits des Rahmenverriegelungswortes und seinen zyklischen Vertauschungen kein positives Ergebnis ergeben hat.

# FIG.1

160 bits

| 1 | 2 | 3 | 4 | 5 | 6 | 7 | 8 |

VT

| 1 | 19 bits |

# FIG.4

1 2 3 4 5 6 7 8 1 2 3 4 5 6 7 8 1 2

$\alpha$

$F_2$

$F_3$

$F_4$

$F_5$

$F_6$

$F_7$

$F_8$

1

# FIG. 2

0 161 177

FIG.3

BASE DE TEMPS

0 161 177